# EUROPEAN PATENT APPLICATION

(11) **EP 4 583 571 A1**
(43) Date of publication of application: **09.07.2025**
(21) Application number: 23860710.5
(22) Date of filing: 01.08.2023
(51) Int. Cl.: H04W 28/06, H04L 69/22, H04L 69/322, H04W 84/12

(54) **METHOD AND DEVICE FOR TRANSMITTING AND RECEIVING AGGREGATED PHYSICAL LAYER PROTOCOL DATA UNIT IN WIRELESS LAN SYSTEM**

(30) Priority: 02.09.2022 KR 20220111580
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Frenkel, Matthias Alexander
(86) International application number: PCT/KR2023/011220
(87) International publication number: WO 2024/049029

(57) **Abstract**

Disclosed are a method and device for operation in a wireless LAN system. The method performed by a first STA in a wireless LAN system according to an embodiment disclosed herein may comprise the steps of: receiving an aggregated physical layer protocol data unit (A-PPDU) header from a second STA; and receiving an A-PPDU from the second STA on the basis of the A-PPDU header, wherein the A-PPDU header includes first information related to at least one frequency resource unit for latency sensitive (LS) data transmission and second information related to the timing for the LS data transmission.

## Description

### [TECHNICAL FIELD]

The present disclosure relates to a communication operation in a wireless local area network (WLAN) system, and more specifically, to a method and device for transmitting and receiving an aggregated physical layer protocol data unit (PPDU) in a next-generation wireless LAN system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.1 1ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for performing A(aggregated)-PPDU transmission and reception in a wireless LAN system.

The technical problem of the present disclosure is to provide a method and device for indicating a channel for transmitting DL A-PPDU header information and latency traffic based on a DL (downlink) A-PPDU header.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method performed by a first station (STA) in a wireless LAN system may include A method performed by a first station (STA) in a wireless LAN system may include receiving an aggregated physical layer protocol data unit (A-PPDU) header from a second STA; and receiving anA-PPDU from the second STA based on the A-PPDU header, and the A-PPDU header may include first information related to at least one frequency resource unit for latency sensitive (LS) data transmission and second information related to timing for the LS data transmission.

According to one embodiment of the present disclosure, a method performed by a second station (STA) in a wireless LAN system may include transmitting an aggregated physical layer protocol data unit (A-PPDU) header from a first STA; and transmitting an A-PPDU to the first STA based on the A-PPDU header, the A-PPDU header may include first information related to at least one frequency resource unit for latency sensitive (LS) data transmission and second information related to timing for the LS data transmission.

### [Technical Effects]

According to various embodiments of the present disclosure, a method and device for efficiently performing A-PPDU transmission and reception in a wireless LAN system can be provided.

According to various embodiments of the present disclosure, a method and device for indicating DL A-PPDU header information and a channel for delayed traffic transmission based on a DL A-PPDU header can be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing the structure of an A-PPDU to which the present disclosure can be applied.
FIG. 9 and FIG. 10 are diagrams for describing a method for transmitting an A-PPDU and an intercepted PPDU according to an embodiment of the present disclosure.
FIG. 11 is a diagram illustrating an example of a subchannel selective transmission (SST) operation element format to which the present disclosure can be applied.
FIG. 12 is a flowchart for describing a method for a first STA to transmit and receive a PPDU according to an embodiment of the present disclosure.
FIG. 13 is a flowchart for describing a method for a second STA to transmit and receive a PPDU according to an embodiment of the present disclosure.
FIG. 14 is a diagram for describing an A-PPDU header and an A-PPDU transmission procedure according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.1 1be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

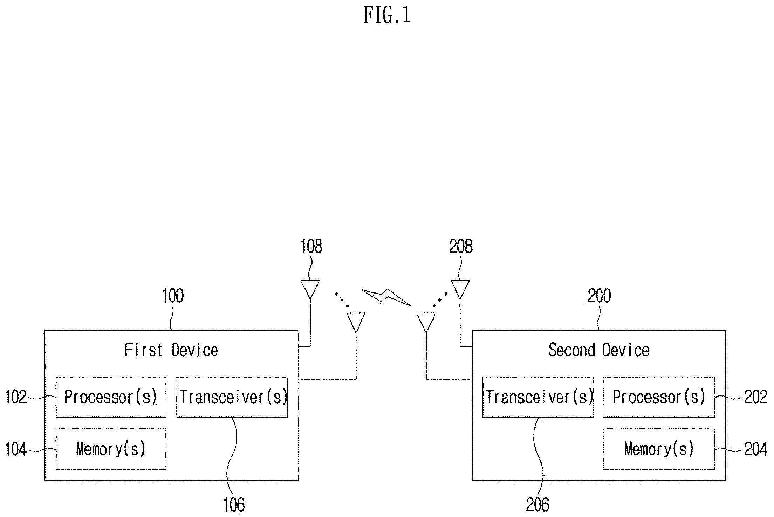

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

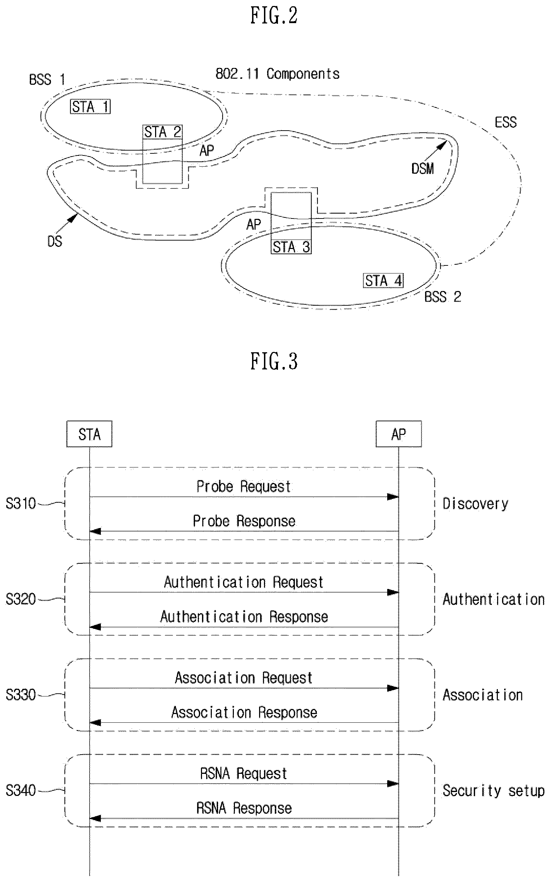

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

ADS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

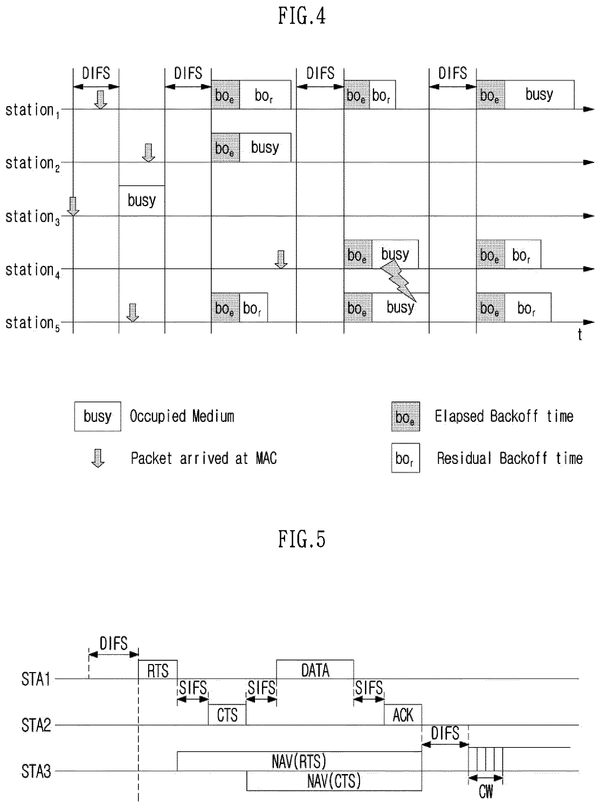

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when anACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

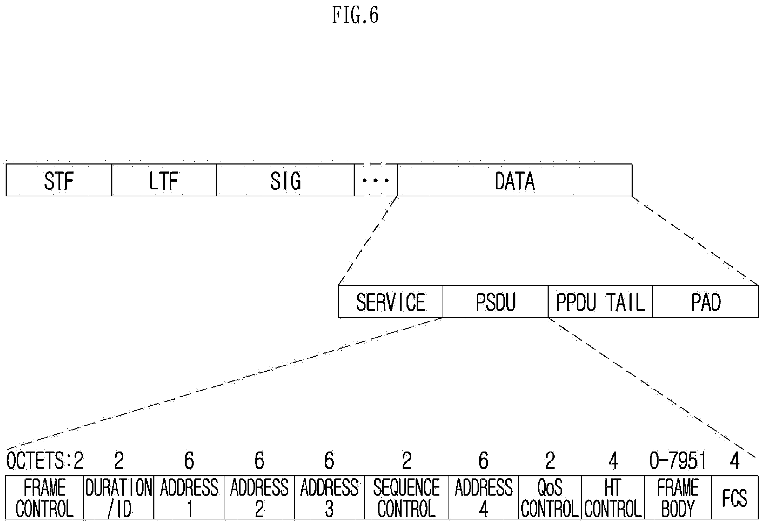

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

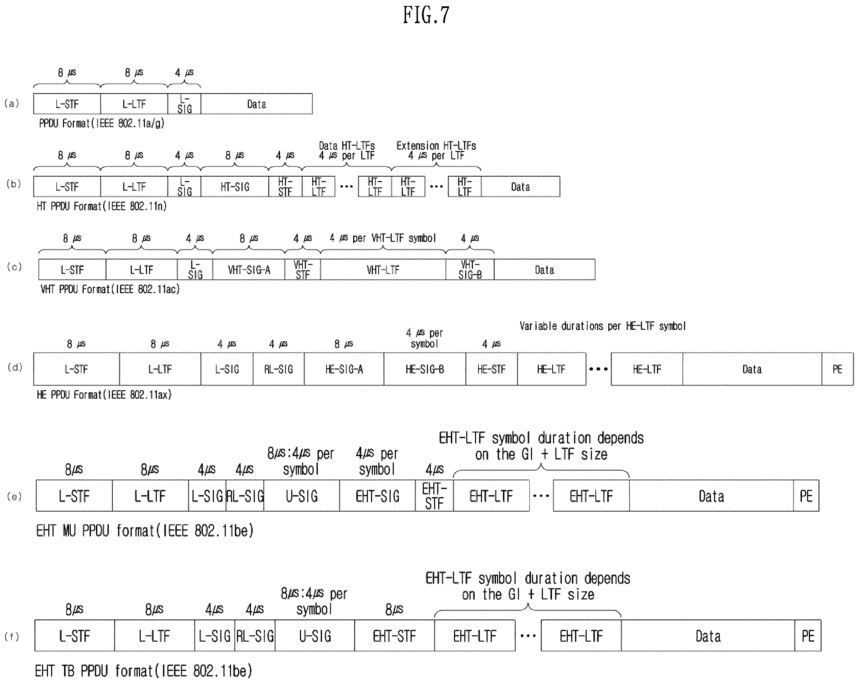

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Structure of Aggregated-PPDU (A-PPDU)

In order to improve efficiency and throughput in a wireless LAN system, A-PPDU transmission may be defined in which PPDUs of different formats/versions are transmitted simultaneously.

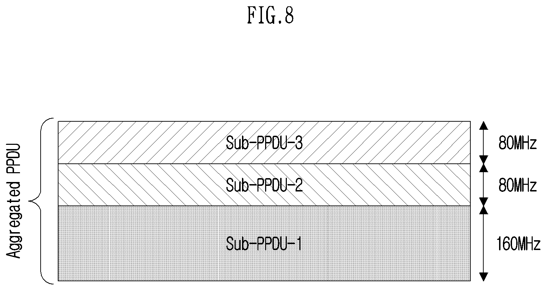

A-PPDU may correspond to a new format in which multiple PPDU formats are merged on the frequency domain. For example, referring to FIG. 8, in A-PPDU transmission, a first sub-PPDU (S-PPDU) format may be transmitted in a first frequency band (e.g., 160 MHz), a second S-PPDU format may be transmitted in a second frequency band (e.g., 80 MHz), and a third S-PPDU format may be transmitted in a third frequency band (e.g., 80 MHz).

However, this is only one embodiment, and in A-PPDU transmission, a first S-PPDU format may be transmitted in a first frequency band, and a second S-PPDU format may be transmitted in a second frequency band.

Each S-PPDU constituting an A-PPDU may be a PPDU of a different format. For example, each S-PPDU may be one of a HE PPDU, an EHT PPDU, and a PPDU of a new format after EHT (hereinafter referred to as "UHR") (i.e., a PPDU of the next version).

Here, each of the HE PPDU, the EHT PPDU, and the UHR PPDU may include a HE MU PPUD, an EHT MU PPUD, and a UHR MU PPDU. The UHR MU PPDU may have a similar structure to the EHT MU PPDU of OFDMA transmission or MU MIMO transmission. However, a dependent field of the U-SIG field of the UHR MU PPDU may be different from a dependent field of the U-SIG field of the EHT MU PPDU. In addition, the EHT MU PPUD may include a UHR SIG field instead of an EHT SIG field.

### Intercepted A-PPDU

An STA may have a transmission opportunity (TXOP). Here, a TXOP refers to a time interval during which a specific STA may have the right to initiate a frame exchange sequence on a wireless medium (WM). A TXOP may be defined by a starting time (during which the STA may have the right) and a maximum duration value.

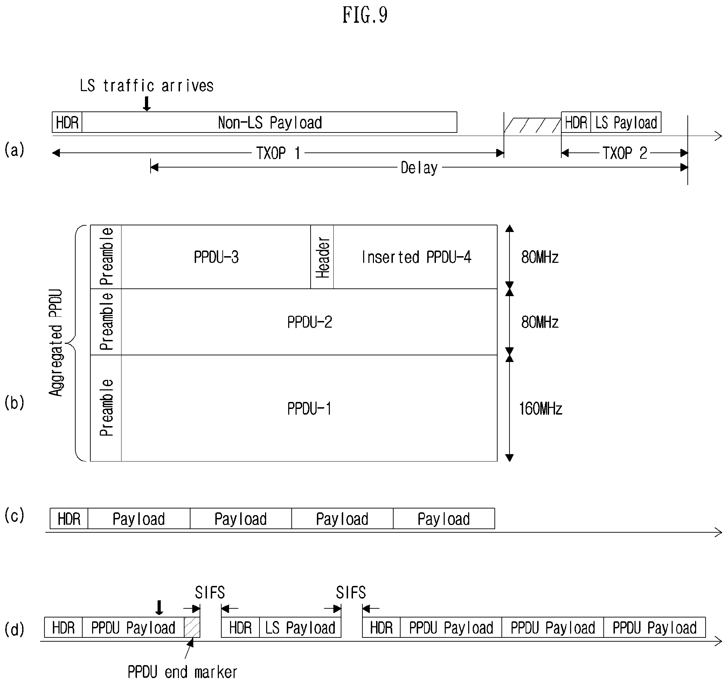

For example, as illustrated in (a) of Fig. 9, assume a case where latency sensitive (LS) traffic arrives while the STA is transmitting non-LS traffic during a TXOP. If the STA continuously transmits non-LS traffic within the TXOP, transmission of the LS traffic must wait until the end of the TXOP, requiring channel contention.

To reduce the delay of LS traffic, a pre-emptible PPDU may be introduced. Accordingly, the LS traffic can be transmitted in the current TXOP (i.e., TXOP 1 of (a) of FIG. 9). The transmitter STA may terminate the ongoing PPDU after the nearest segment with a PPDU end marker. The PPDU end marker may be a rotation of L-LTF or other predefined sequences.

For example, as illustrated in (b) of FIG. 9, when LS traffic arrives while PPDU-3 is transmitted in an 80 MHz bandwidth, PPDU-4 based on the LS traffic can be transmitted within the bandwidth.

As an example of the present disclosure, for a non-LS PPDU of 4 ms length, the transmitting STA may choose to interrupt the transmission and reallocate the TXOP to LS traffic.

For this purpose, as illustrated in (c) of Fig. 9, when LS traffic does not arrive, the PHY layer may encode a 4 ms PPDU payload into 4 PPDU payloads (i.e., each PPDU payload is 1 ms).

As illustrated in (d) of Fig. 9, when LS traffic arrives during transmission of non-LS traffic, the PHY layer may terminate transmission of the non-LS traffic at the nearest boundary with a PPDU end marker. The receiving STA may forward the received segment to the upper layer.

In another example of the present disclosure, a transmitter STA may choose to terminate an ongoing transmission and subsequently transmit LS traffic.

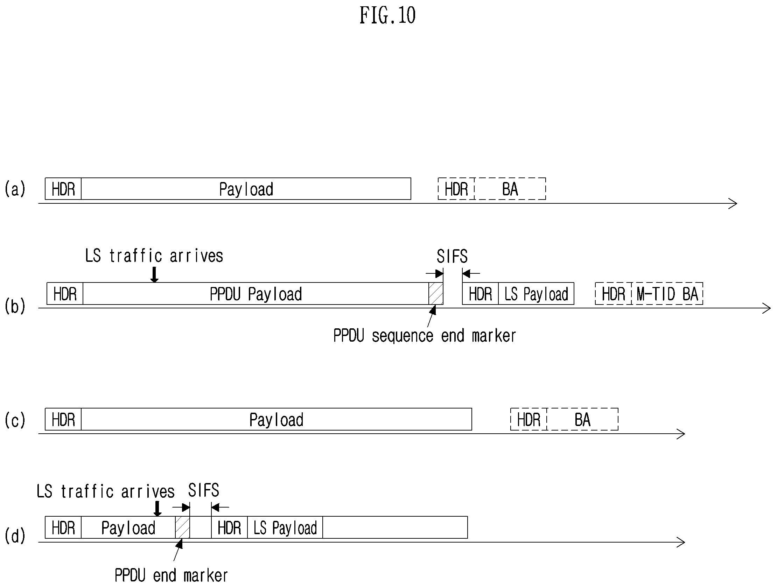

For example, as illustrated in (a) of FIG. 10, if non-LS traffic does not arrive, the PHY layer may encode the PPDU and wait for ACK reception.

As illustrated in (b) of Fig. 10, when LS traffic arrives during transmission of non-LS traffic, the PHY layer may insert a PPDU sequence end marker at the end of the PPDU. Accordingly, the following frame exchange may be stopped, and the transmitter STA may transmit LS traffic.

If a PPDU sequence end marker is detected at the end of a PPDU, the receiving STA may expect to receive an LS PPDU after SIFS without transmitting a BA.

In another example of the present disclosure, a transmitter STA may choose to immediately stop a currently ongoing transmission.

For example, as illustrated in (c) of FIG. 10, if LS traffic does not arrive, the PHY layer may encode the PPDU and wait for ACK reception.

As illustrated in (d) of Fig. 10, when LS traffic arrives, the PHY layer may stop the current transmission with a PPDU end marker and transmit the LS traffic after SIFS. The receiving STA may remove all or part of the received bits depending on whether a complete MPDU has been received.

### SST(subchannel selective transmission)

SST may include dynamically changing the primary channel within the overall bandwidth. For example, SST operation may include operating under the assumption that only a portion of the overall bandwidth is the full bandwidth.

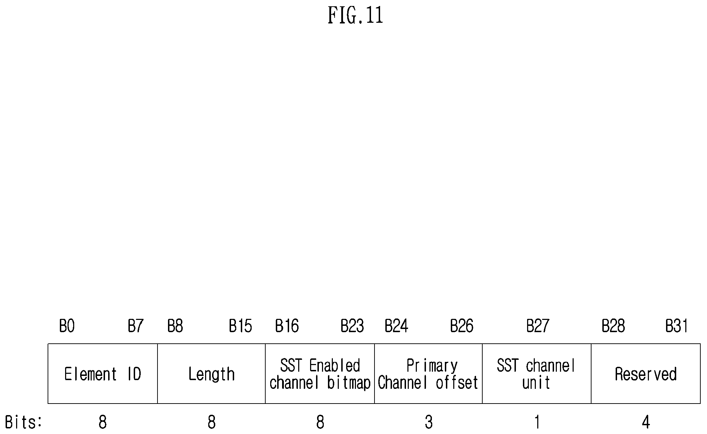

As an example of the present disclosure, subchannel selective transmission (SST) may be applied based on the SST operating elements illustrated in FIG. 11.

The SST operation element format in an existing wireless LAN system may include an 8-bit Element ID field, an 8-bit Length field, an 8-bit SST Enabled Channel Bitmap field, a 3-bit Primary Channel Offset field, a 1-bit SST Channel Unit field, and a 4-bit reserved bit.

The element ID field is used to identify an element of the format, and the length field can indicate the number of octets of the element excluding the element ID field and the length field.

The SST enabled Channel Bitmap field may include a bitmap indicating the channels that are enabled for SST operation. Each bit of the bitmap corresponds to one channel of the same width as the value of the SST Channel Unit field, and the least significant bit (LSB) may correspond to the lowest numbered subchannel in the SST enabled Channel Bitmap field.

The channel number of each channel in the SST enabled Channel Bitmap field may be equal to PCN minus (-) OPC plus (+) POS, where PCN is the value of the Primary Channel Number subfield of the most recently transmitted S1G operational element. OPC is the offset of the primary channel relative to the lowest numbered subchannel in the bitmap specified by the value of the Primary Channel Offset field. POS is the position of the channel in the bitmap.

Setting a bit position in the bitmap to 1 may indicate that the subchannel is enabled for SST operation, but transmissions from an SST STA on that subchannel are permitted according to the rules defined in the specification. One or more bits in the bitmap may be equal to 1.

The Primary Channel Offset field may indicate the relative position of the primary channel with respect to the lowest numbered channel in the SST Enabled Channel Bitmap field. For example, setting the Primary Channel Offset field to 2 may indicate that the primary channel is the third subchannel in the SST enabled Channel Bitmap.

The SST channel unit field may indicate the channel width unit of each SST channel. Setting the field to 1 can indicate that the channel width unit is 1 MHz, and setting the field to 2 may indicate that the channel width unit is 2 MHz.

Hereinafter, the structure of an A-PPDU header and a procedure related thereto that enable intercepted A-PPDU transmission used to resolve transmission delay issues of delay-sensitive traffic as an embodiment of the present disclosure are described.

### A-PPDU transmission and reception method based on A-PPDU header

As described above, intercepted A-PPDU can be introduced to prevent delay in A-PPDU transmission. This is a method of transmitting LS traffic within A-PPDU through a specific channel using the Pre-emptible PPDU merging method when LS traffic arrives during A-PPDU transmission.

For example, the above-described method may include a method in which the sub-PPDU transmission for an STA in which LS traffic has occurred among the STAs allocated to each sub-PPDU transmission within the A-PPDU is stopped, and the LS traffic is transmitted to the STA in the form of an intercepted PPDU using the corresponding channel. In the case of the above-described method, an instruction regarding a channel to be used for transmitting intercepted PPDU during A-PPDU transmission may not be necessary.

However, if there is no sub-PPDU being transmitted to the STA where LS traffic has occurred, a specific channel for transmission of the intercepted PPDU may need to be determined in advance.

Additionally or alternatively, the STA may instruct in advance that a specific sub-PPDU within an A-PPDU is short and thus the channel can be used for LS traffic transmission from a specific timing.

Additionally or alternatively, a specific channel may be configured/defined to be used only for LS traffic transmission when transmitting A-PPDUs. For example, only dummy signals may be transmitted on a specific channel, and may be used for LS traffic transmission only when LS traffic occurs.

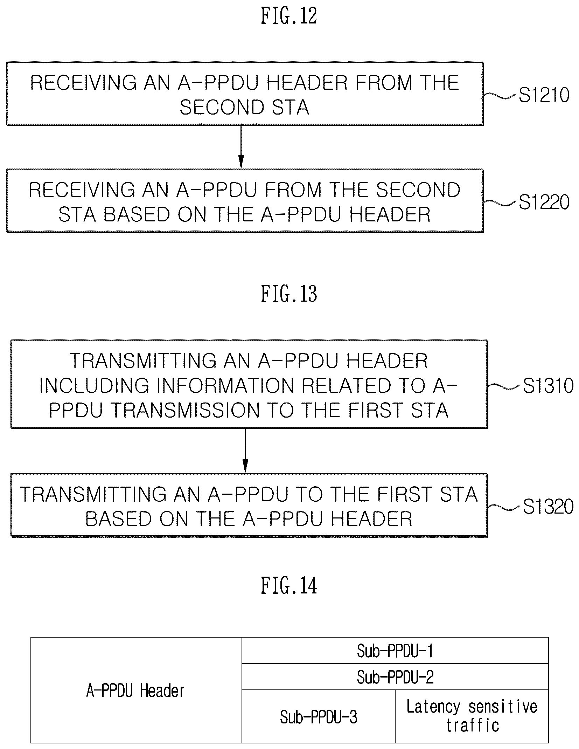

FIG. 12 is a flowchart for explaining a method for a first STA to transmit and receive a PPDU according to one embodiment of the present disclosure. In FIG. 12 and FIG. 13, each of the first STA and the second STA may be one of the APs among the non-AP STAs.

The first STA may receive an aggregated physical layer protocol data unit (A-PPDU) header from the second STA (S1210).

Here, the A-PPDU header may include first information related to at least one frequency resource unit for latency sensitive (LS) data transmission and second information related to timing for LS data transmission.

As an example of the present disclosure, the first information may be received from the second STA via the U (universal)-SIG field or the UHR (ultra-high reliability) field of the A-PPDU header.

For example, the first information may be indicated via a delay-sensitive traffic transmission channel field included in the U-SIG field of the A-PPDU header. That is, a channel capable of transmitting LS data may be indicated via the delay-sensitive traffic transmission channel field.

Here, based on the absence of LS data (i.e., when LS data does not arrive), a dummy signal may be transmitted through a specific channel indicated by the first information.

For example, based on the allocation of a specific channel by information related to subchannel selective transmission, a specific channel may be indicated as a channel for LS data transmission by the first information included in the U-SIG field of the A-PPDU header.

As another example of the present disclosure, the UHR-SIG field of the A-PPDU header may include a user field corresponding to an identifier (ID) of the first STA. And, the first information may be received from the second STA through the user field corresponding to the ID of the first STA.

That is, by setting the ID of the STA to a specific value (i.e., a specific value corresponding to the first STA) in the user field mapped to the RU/MRU to which the LS data is to be transmitted, the frequency resource unit to which the LS data is to be transmitted may be indicated to the first STA as the corresponding RU/MRU.

As an example of the present disclosure, the U-SIG field of the A-PPDU header may include at least one of puncturing information of at least one resource unit for LS data transmission, an A-PPDU flag field indicating transmission of an A-PPDU, an A-PPDU structure field indicating a structure of an A-PPDU, or a field indicating a bandwidth of at least one sub-PPDU included in the A-PPDU.

And, the second information may be received from the second STA via an LS traffic transmission timing subfield indicating a timing at which LS data transmission is possible.

The first STA may receive an A-PPDU from the second STA based on the A-PPDU header (S1220). That is, the first STA may receive an A-PPDU from the second STA based on information included in the A-PPDU header.

Here, the A-PPDU may include multiple sub-PPDUs. Based on the arrival of LS data while receiving a specific sub-PPDU corresponding to a specific bandwidth among the multiple sub-PPDUs, the reception of a specific sub-PPDU may be stopped. Then, the first STA may receive LS data through a specific bandwidth based on the first information and the second information.

The method performed by the first STA described in the example of FIG. 12 may be performed by the first device (100) of FIG. 1. For example, one or more processors (102) of the first device (100) of FIG. 1 may receive an A-PPDU header from a second STA through one or more transceivers (106). The one or more processors (102) may be configured to receive an A-PPDU from the second STA through one or more transceivers (106) based on the A-PPDU header.

Furthermore, one or more memories (104) of the first device (100) may store instructions for performing the method described in the example of FIG. 12 when executed by one or more processors (102).

FIG. 13 is a flowchart illustrating a method for a second STA to transmit and receive a PPDU according to one embodiment of the present disclosure.

The second STA may transmit an A-PPDU header including information related to A-PPDU transmission to the first STA (S1310).

The structure of the A-PPDU header and the information included in the A-PPDU header have been described with reference to Fig. 12, so any duplicate description will be omitted.

The second STA may transmit an A-PPDU to the first STA based on the A-PPDU header (S1320).

For example, if LS traffic is generated/arrived while transmitting A-PPDU, the second STA may transmit the LS traffic to the first STA based on at least one of first information related to at least one frequency resource unit for LS data transmission and second information related to timing for LS data transmission.

The method performed by the second STA described in the example of FIG. 13 may be performed by the second device (200) of FIG. 1. For example, one or more processors (202) of the second device (200) of FIG. 13 may be configured to transmit an A-PPDU header to the first STA via one or more transceivers (206). One or more processors (202) of the second device (200) may be configured to transmit an A-PPDU based on the A-PPDU header to the first STA via one or more transceivers (206).

Furthermore, one or more memories (204) of the second device (200) may store instructions for performing the method described in the example of FIG. 13 when executed by one or more processors (202).

Hereinafter, the structure of the A-PPDU header that enables intercepted A-PPDU transmission and the related procedures are described in detail.

### Embodiment 1

The A-PPDU header may be used to indicate a channel and/or timing for LS traffic transmission when transmitting anA-PPDU. That is, the A-PPDU header may be transmitted before transmitting the A-PPDU, and the A-PPDU header may include information related to a channel and/or timing for LS traffic transmission.

Additionally or alternatively, the A-PPDU header may include at least one of information indicating transmission of the A-PPDU, the structure of the A-PPDU, an indication of bandwidth associated with the A-PPDU transmission, information for allocating a specific channel to each STA, or information indicating a specific channel/timing to be used for LS traffic transmission.

For example, if SST is pre-applied, the A-PPDU header may not include information for allocating a specific channel to each STA.

Accordingly, when an A-PPDU header is received, the STA can check information related to transmission of the A-PPDU and the channel/timing to be used for LS traffic transmission.

As an example of the present disclosure, as illustrated in FIG. 14, after the A-PPDU header is transmitted, the A-PPDU may be transmitted based on the A-PPDU header. The A-PPDU may transmit sub-PPDUs corresponding to each bandwidth. For example, when LS traffic arrives, transmission of sub-PPDU-3 may be stopped and LS traffic may be transmitted based on information included in the A-PPDU header.

### Embodiment 2

(DL) The A-PPDU header may include an L-STF field, an L-LTF field, an L-SIG field, an RL-SIG field, a U-SIG field, and a UHR-SIG field. That is, the A-PPDU header may be configured similarly to the preamble structure used in the UHR PPDU. However, the A-PPDU header may include content different from the content included in the preamble of the UHR PPDU.

For example, the A-PPDU header may be constructed using the entire bandwidth over which the A-PPDU is to be transmitted.

Additionally, phase rotation may be applied to the A-PPDU header to reduce the peak-to-average-power ratio (PAPR). For example, the same phase rotation as before (e.g., 80 MHz phase rotation) may be applied up to a bandwidth of 320 MHz. For a bandwidth of 480 or 640 MHz, the 80 MHz phase rotation may be repeatedly applied, and additional phase rotation may be applied every 80 MHz.

The L-STF field and/or L-LTF field included in the A-PPDU header may be repeated every 20 MHz.

The L-SIG field and/or RL-SIG field included in the A-PPDU header may be configured identically to the L-SIG field and/or RL-SIG field included in the EHT PPDU.

For example, the LENGTH field included in the L-SIG field and/or the RL-SIG field may be set by considering the length of the entire A-PPDU. That is, the LENGTH field included in the L-SIG field and/or the RL-SIG field may be set/generated by considering the length of the longest sub-PPDU from the A-PPDU header.

As another example, considering the decoding problem after the A-PPDU header, the LENGTH field included in the L-SIG field and/or the RL-SIG field may be set considering only the A-PPDU header length. In this case, since only the length of UHR-SIG in the A-PPDU header is indicated by the LEGNTH field, the A-PPDU transmission can be implicitly indicated through the A-PPDU header.

In addition, the value of reserved bit 4 may be set to 1, which can indicate A-PPDU transmission. That is, A-PPDU transmission may be indicated through the L-SIG field and/or the RL-SIG field.

As an example of the present disclosure, an independent field of the U-SIG field (i.e., a version independent field) may include at least one of a PHY version identifier, a bandwidth field, a UL/DL field, a BSS color field, a TXOP field, a disregard field, or a validate field.

For example, the PHY version identifier field may indicate UHR. The bandwidth field may indicate the total bandwidth for A-PPDU transmission. The UL/DL field may indicate DL. The BSS color may indicate the BSS identifier. The TXOP field may indicate the TXOP length.

For example, an A-PPDU flag field may be defined to indicate A-PPDU transmission using 1 bit of an ignore field or a valid field. That is, an STA may determine whether an A-PPDU is transmitted through the A-PPDU flag field. For example, the A-PPDU flag field may indicate whether a PPDU transmitted subsequent to an A-PPDU header is an A-PPDU.

As another example, the A-PPDU structure field may be defined using 1 bit of the ignore field or the valid field. The A-PPDU structure field may indicate the A-PPDU structure (e.g., the composition of sub-PPDUs).

As another example, a sub-PPDU bandwidth field may be defined that indicates the bandwidth of each sub-PPDU by using 1 bit of the ignore field or the valid field. Based on the number and type of sub-PPDUs indicated in the A-PPDU Structure field, the Sub-PPDU Bandwidth field may be composed of multiple fields.

As another example, the bandwidth of the sub-PPDU may be determined in advance according to the A-PPDU structure and bandwidth. In this case, the sub-PPDU bandwidth field may not be included in the U-SIG field.

As an example of the present disclosure, a dependent field of the U-SIG field (i.e., a version dependent field) may include an A-PPDU structure field and a sub-PPDU bandwidth field defined in an independent field of the U-SIG field.

As another example, a dependent field of the U-SIG field may include a Latency Sensitive Traffic TX Channel field for intercepted PPDU transmission. The Latency Sensitive Traffic TX Channel field may indicate a channel to be used for LS traffic and/or intercepted PPDU transmission.

The delay sensitive traffic transmission channel field may be configured in bitmap format.

For example, the Delay Sensitive Traffic Transmission Channel field may include a bitmap corresponding to each 20 MHz channel considering the entire bandwidth of the A-PPDU. That is, the bit corresponding to the channel on which LS traffic is transmitted among the bitmaps may be set to 1 (or 0).

As another example, the Delay Sensitive Traffic Transmission Channel field may include a bitmap corresponding to each 20 MHz channel within the channel on which the UHR PPDU is transmitted. That is, the bit corresponding to the channel on which the LS traffic is transmitted among the bitmaps may be set to 1 (or 0).

For example, assume that a specific sub-PPDU transmission may end early because the specific sub-PPDU is a short packet. Here, the amount of data corresponding to a specific STA may be small compared to the length of the A-PPDU, and thus, the data transmitted to the specific STA may be defined as a short packet.

As another example, a specific sub-PPDU may be defined as a short packet if the length of the specific sub-PPDU is less than a threshold. In this case, a channel to be used for transmitting LS traffic may be indicated through the delay-sensitive traffic transmission channel field.

Additionally or alternatively, the dependent fields of the U-SIG field may include a Delay Sensitive Traffic Tx Timing subfield. The Delay Sensitive Traffic Tx Timing subfield may indicate a timing at which delay sensitive traffic can be transmitted, and the Delay Sensitive Traffic Tx Channel field may indicate/allocate a channel only for LS traffic transmission.

Here, when transmitting DL A-PPDU, if there is no delay-sensitive traffic, a dummy signal may be transmitted on a channel only for LS traffic transmission indicated by the delay-sensitive traffic Tx channel field.

As an example of the present disclosure, in a situation where a specific STA transmits periodic LS traffic and the STA is assigned to a specific channel by the SST, the specific channel may be indicated to be used only for LS traffic transmission via the delay sensitive traffic Tx channel field.

As another example of the present disclosure, puncturing information of an A-PPDU may be indicated through a punctured channel information field, etc. The puncturing information may be equally applied to the A-PPDU header.

The UHR-SIG field may include common fields and user fields similar to the EHT-SIG field.

For example, the common field may indicate RU allocation for each 20 MHz channel through the RU allocation field. However, since information included in the EHT-SIG field may be transmitted through UHR-SIG, etc. in the A-PPDU, such information may not be included in the UHR-SIG field of the A-PPDU header.

And, the corresponding RU/MRU may be allocated to a specific STA by using the STA ID in the user field mapped to each RU/MRU. The STA may perform channel switching in advance and wait by using the RU/MRU mapping information included in the user field.

For example, in a situation where a specific channel has already been allocated to each STA through SST, etc., RU allocation information can be indicated to the STA through the SIG field when transmitting an A-PPDU. Accordingly, the A-PPDU header may not have a user field and a RU allocation field.

Additionally, by setting the STA ID to a specific value in the user field mapped to the RU/MRU to which the LS traffic is to be transmitted, the RU/MRU to which the LS traffic is to be transmitted can be indicated to the STA.

Here, the RU/MRU may be applied only to LS traffic. The situation where a specific STA is assigned to the RU/MRU and performs a transmission operation and an intercepted PPDU is transmitted, or the situation where a short packet sub-PPDU is transmitted and LS traffic is transmitted after a specific timing may not be considered. Other information for A-PPDU transmission can be transmitted through the SIG field in the A-PPDU.

As another example of the present disclosure, since a specific channel is allocated to STA(s) by SST, and specific RU/MRU can be allocated in the SIG of the A-PPDU, the A-PPDU header may include an L-STF field, an L-LTF field, an L-SIG field, an RL-SIG field, and a U-SIG field (i.e., only up to the U-SIG field exists). By indicating channel and timing information for LS traffic transmission in the U-SIG of the A-PPDU header, overhead can be efficiently managed.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, but may be applied to various WLAN or wireless communication systems other than the IEEE 802.11-based system.

## Claims

1. A method performed by a first station (STA) in a wireless LAN system, the method comprising:
receiving an aggregated physical layer protocol data unit (A-PPDU) header from a second STA; and
receiving an A-PPDU from the second STA based on the A-PPDU header,
wherein the A-PPDU header includes first information related to at least one frequency resource unit for latency sensitive (LS) data transmission and second information related to timing for the LS data transmission.

2. The method of claim 1, wherein:
the first information is received from the second STA through an U(universal)-SIG field or an UHR(ultra-high reliability) field of the A-PPDU header.

3. The method of claim 2, wherein:
based on a specific channel being allocated by information related to subchannel selective transmission, the specific channel is indicated as a channel for transmitting the LS data by the first information included in the U-SIG field of the A-PPDU header.

4. The method of claim 2, wherein:
the U-SIG field of the A-PPDU header includes at least one of an A-PPDU flag field indicating transmission of the A-PPDU, an A-PPDU structure field indicating a structure of the A-PPDU, or a field indicating a bandwidth of at least one sub-PPDU included in the A-PPDU.

5. The method of claim 1, wherein:
based on non-existence of the LS data, a dummy signal is transmitted through a specific channel indicated by the first information.

6. The method of claim 1, wherein:
the second information is received from the second STA through an LS traffic transmission timing subfield indicating a timing at which the LS data transmission is possible.

7. The method of claim 2, wherein:
the U-SIG field of the A-PPDU header includes puncturing information of at least one frequency resource unit for the LS data transmission.

8. The method of claim 2, wherein:
the UHR-SIG field includes a user field corresponding to the ID (identifier) of the first STA, and
the first information is received from the second STA through the user field.

9. The method of claim 1, wherein:
the A-PPDU includes a plurality of sub-PPDUs, and
based on the LS data arriving while receiving a specific sub-PPDU corresponding to a specific bandwidth among the plurality of sub-PPDUs, the reception of the specific sub-PPDU is stopped, and the LS data is received through the specific bandwidth based on the first information and the second information.

10. A first station (STA) operating in a wireless LAN system, the first STA comprising:
at least one transceiver; and
at least one processor connected to the at least one transceiver,
wherein the at least one processor is configured to:
receive, through the at least one transceiver, an aggregated physical layer protocol data unit (A-PPDU) header from a second STA; and
receive, through the at least one transceiver, an A-PPDU from the second STA based on the A-PPDU header,
wherein the A-PPDU header includes first information related to at least one frequency resource unit for latency sensitive (LS) data transmission and second information related to timing for the LS data transmission.

11. A method performed by a second station (STA) in a wireless LAN system, the method comprising:
transmitting an aggregated physical layer protocol data unit (A-PPDU) header from a first STA; and
transmitting an A-PPDU to the first STA based on the A-PPDU header,
wherein the A-PPDU header includes first information related to at least one frequency resource unit for latency sensitive (LS) data transmission and second information related to timing for the LS data transmission.

12. A second station (STA) operating in a wireless LAN system, the first STA comprising:
at least one transceiver; and
at least one processor connected to the at least one transceiver,
wherein the at least one processor is configured to:
transmit, through the at least one transceiver, an aggregated physical layer protocol data unit (A-PPDU) header from a first STA; and
transmit, through the at least one transceiver, an A-PPDU to the first STA based on the A-PPDU header,
wherein the A-PPDU header includes first information related to at least one frequency resource unit for latency sensitive (LS) data transmission and second information related to timing for the LS data transmission.

13. A processing apparatus configured to control a first station (STA) in a wireless LAN system, the processing apparatus comprising:
at least one processor; and
at least one computer memory operably connected to the at least one processor and storing instructions that, based on being executed by the at least one processor, perform operations comprising:
receiving an aggregated physical layer protocol data unit (A-PPDU) header from a second STA; and
receiving an A-PPDU from the second STA based on the A-PPDU header,
wherein the A-PPDU header includes first information related to at least one frequency resource unit for latency sensitive (LS) data transmission and second information related to timing for the LS data transmission.

14. At least one non-transitory computer-readable medium storing at least one instruction,
wherein the at least one instruction executable by at least one processor controls a device in a wireless LAN system to:
receive an aggregated physical layer protocol data unit (A-PPDU) header from a second STA; and
receive an A-PPDU from the second STA based on the A-PPDU header,
wherein the A-PPDU header includes first information related to at least one frequency resource unit for latency sensitive (LS) data transmission and second information related to timing for the LS data transmission.
